# EUROPÄISCHE PATENTANMELDUNG

(11) **EP 2 182 126 A1**
(43) Veröffentlichungstag der Anmeldung: **05.05.2010**
(21) Anmeldenummer: 09171463.4
(22) Anmeldetag: 28.09.2009
(51) Int. Cl.: E04B 2/16, E04C 1/40

(54) **Wärmedämmziegel**

(30) Priorität: 30.10.2008 DE 202008014415 U
(71) Anmelder: Schlagmann Baustoffwerke GmbH & Co. KG, 84367 Zeilarn (DE)
(72) Erfinder: Edmüller, Johannes, 84367 Zeilarn (DE)
(74) Vertreter: HOFFMANN EITLE

(57) **Zusammenfassung**

Die Erfindung betrifft einen Wärmedämmziegel (1) aus einem gebrannten Ziegelmaterial, mit einem oder einer Mehrzahl von Horhlöchern (2) und mindestens zwei Stoßflächen (3, 4), in denen jeweils eine Verzahnung vorgesehen ist. Der erfindungsgemäße Narmedämmziegel ist **dadurch gekennzeichnet, dass** der Wärmedämmziegel (1) eine Dicke von 26 cm bis 28 cm, bevorzugt 27 cm aufweist, gemessen in einer Richtung senkrecht zur Erstreckungsrichtung des mindestens einen Hochlochs (2) sowie senkrecht zu den Stoßflächen (3, 4).

## Beschreibung

### Technisches Gebiet

Die Erfindung betrifft einen Wärmedämmziegel aus einem gebrannten Ziegelmaterial, mit einem oder einer Mehrzahl von Hochlöchern und mindestens zwei Stoßflächen, in denen jeweils eine Verzahnung vorgesehen ist.

### Stand der Technik

Wärmedämmziegel der hier zur Rede stehenden Art haben in der Baupraxis vielfältigste Anforderungen zu erfüllen, die sich neben dem Wärmeschutz auch auf Schallschutz, Brandschutz, Tragsicherheit, Dauerhaftigkeit, etc. beziehen. Neben diesen technischen Anforderungen ist im Bauwesen auch zunehmen festzustellen, dass die wachsende Verdichtung der Bebauung in Ballungsräumen und die hiermit verbundenen, steigenden Grundstückspreise maßgeblichen Einfluss auf praktische Umsetzung von Bauvorhaben gewinnen. So wird die Auswahl der Baustoffe in zunehmendem Maße nicht nur aus technischen, sondern zumindest teilweise auch aus Kosten-Nutzen-Überlegungen getroffen. Dabei hat sich jedoch gezeigt, dass bekannte Wärmedämmziegel hier bisher keine Lösungsansätze bieten.

### Darstellung der Erfindung

Es ist daher Aufgabe der vorliegenden Erfindung, einen gattungsgemäßen Wärmedämmziegel bereitzustellen, der bei voller Wärmedämmung eine Optimierung des umbauten Raumes ermöglicht.

Diese Aufgabe wird durch einen Wärmedämmziegel nach Anspruch 1 gelöst. Besonders bevorzugte Ausführungsformen der Erfindung sind in den abhängigen Ansprüchen angegeben.

Der Erfindung liegt der Gedanke zugrunde, einen Wärmedämmziegel der eingangs genannten Art derart weiterzuentwickeln, dass er weiterhin alle Wärmeschutztechnischen Anforderungen erfüllt, jedoch dem Bauherrn ein Maximum an umbautem Raum ermöglicht. Dabei haben die Erfinder festgestellt, dass ein besonders großes Einspar- bzw. Raumgewinnpotential bei Wärmedämmziegeln für Außenwände besteht.

In diesem Bereich kommen gegenwärtig standardmäßig Ziegel mit einer Breite von 36 cm bzw. 30 cm zum Einsatz. Demgegenüber sieht die Erfindung vor, dass der erfindungsgemäße Wärmedämmziegel eine Dicke von 26 bis 28 cm, bevorzugt 27 cm aufweist, gemessen in einer Richtung senkrecht zur Erstreckungsrichtung des mindestens einen Hochlochs sowie senkrecht zu den Stoßflächen. Auf diese Weise lässt sich - bei konstanten Außenmaßen des jeweiligen Gebäudes - ein Raumgewinn von einigen Prozent erzielen, ohne dass hierfür irgendein Nachteil in Kauf genommen werden müsst. Denn die Erfinder haben festgestellt, dass sich mit den erfindungsgemäßen Wärmedämmziegeln weiterhin die geforderten Grenzwerte für die Wärmedämmung einhalten lassen und auch die sonstigen Anforderungen wie Schallschutz, Statik, etc. eingehalten werden können. Nicht zuletzt ergibt sich durch den erfindungsgemäßen Wärmedämmziegel auch eine Materialeinsparung.

Um das gewünschte bzw. benötigte Wärmedämmvermögen des erfindungsgemäßen Wärmedämmziegels zuverlässig sicherzustellen, ist gemäß einer Weiterbildung der Erfindung vorgesehen, dass das gebrannte Ziegelmaterial Poren enthält, die einen maximalen Porenradius von 1,0 mm aufweisen, wobei diese Poren mindestens 20 % des Volumens des Ziegelmaterials einnehmen. Hierdurch ergibt sich gegenüber dem Stand der Technik nicht nur eine feinere, sondern vor allem auch eine gleichmäßigere Porenverteilung, die ermöglicht, die Wärmeleitfähigkeit des Ziegelmaterials drastisch zu senken. Dabei ist es besonders bevorzugt, dass die Poren des Ziegelmaterials einen maximalen Porenradius von 0,8 mm, bevorzugt 0,6 mm aufweisen.

Andererseits haben die Erfinder festgestellt, dass das Porenvolumen des Ziegelmaterials auch nicht zu groß werden darf, da andernfalls nicht nur die Schallschutz-technischen und statischen Eigenschaften des Wärmedämmziegels verschlechtert werden, sondern sogar eine Verschlechterung bzw. Erhöhung der Wärmeleitfähigkeit zu verzeichnen ist. Vor diesem Hintergrund ist gemäß einer Weiterbildung der Erfindung vorgesehen, dass die Poren höchsten 30 %, bevorzugt 22 bis 28 % des Volumens des Ziegelmaterials einnehmen.

Insgesamt hat sich gezeigt, dass der erfindungsgemäße Wärmedämmziegel mit der erfindungsgemäßen Dicke sich besonders gut für baupraktische Zwecke eignet, wenn gemäß einer Weiterbildung der Erfindung das gebrannte Ziegelmaterial eine Wärmeleitfähigkeit von höchsten 0,25 W/(m*K), bevorzugt höchsten 0,24 W/(m*K) aufweist.

Um den Wärmedurchgangswiderstand des erfindungsgemäßen Wärmedämmziegels noch weiter zu erhöhen, ist gemäß einer Weiterbildung der Erfindung vorgesehen, dass in zumindest einem Hochloch ein Wärmedämmmaterial vorgesehen ist. Dabei kann das Wärmedämmmaterial im Rahmen der Erfindung aus unterschiedlichsten Stoffen und Materialien ausgewählt werden. Gemäß einer Weiterbildung dieses Konzepts ist jedoch vorgesehen, dass das Wärmedämmmaterial einen mineralischen Stoff, wie insbesondere hydrophobiertes Perlit, und/oder ein Kunststoffmaterial wie insbesondere Polystyrol aufweist. Hierdurch lässt sich eine gute Wärmedämmung mit einer einfachen Herstellung und einem dauerhaften Bauprodukt vereinen.

Die Erfindung betrifft ferner einen ungebrannten Ziegelrohling nach Anspruch 8, mittels dessen durch Brennen ein erfindungsgemäßer Wärmedämmziegel hergestellt werden kann, um die oben beschriebenen Vorteile zu erzielen.

### Kurze Beschreibung der Zeichnung

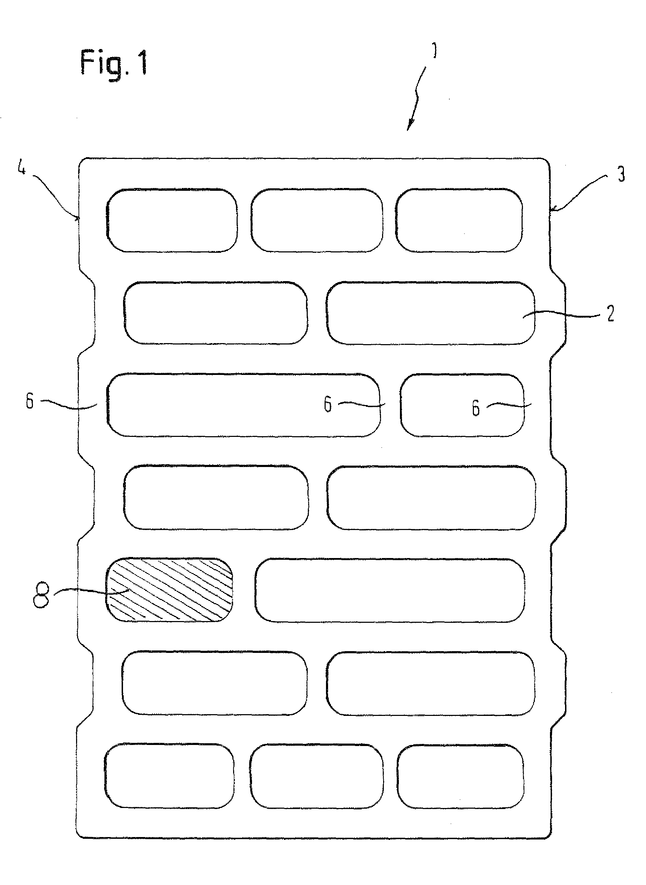

- Fig. 1: zeigt schematisch einen Wärmedämmziegel als bevorzugte Ausführungsform der vorliegenden Erfindung.

### Ausführliche Beschreibung bevorzugter Ausführungsformen

Bevorzugte Ausführungsformen der vorliegenden Erfindung werden nachfolgend ausführlich unter Bezugnahme auf die begleitende Zeichnung beschrieben.

Ein Wärmedämmziegel 1 als bevorzugte Ausführungsform der Erfindung ist in Fig. 1 schematisch in einer Draufsicht dargestellt. Der Wärmedämmziegel 1, der aus einem gebrannten Ziegelmaterial (d.h. auf der Basis von Ton) hergestellt ist, umfasst eine Mehrzahl von Hochlöchern 2, die sich senkrecht zur Zeichenebene in Fig. 1 erstrecken. Obgleich in der vorliegenden Ausführungsform eine Vielzahl von Hochlöchern gezeigt ist, kann der Wärmedämmziegel auch nur eine geringe Anzahl bzw. auch nur ein Hochloch 2 aufweisen.

Ferner umfasst der Wärmedämmziegel 1 zwei Stoßflächen 3, 4, in denen jeweils eine Verzahnung vorgesehen ist.

In einer Richtung senkrecht zu den Stoßflächen 3, 4 sowie senkrecht zu den Stoßflächen 3, 4 sowie senkrecht zur Erstreckungsrichtung der Hochlöcher 2 besitzt der Wärmedämmziegel 1 eine Dicke, die in der vorliegenden Ausführungsform 27 cm beträgt. Auf diese Weise eröffnet der erfindungsgemäße Ziegel völlig neue Möglichkeiten bei der Raumausnutzung von Gebäuden.

Um gleichzeitig ein optimales Wärmedämmverhalten zu erzielen, weist das gebrannte Ziegelmaterial Poren auf, die in der vorliegenden Ausführungsform einen maximalen Porenradius von 0,5 mm aufweisen. Dabei beträgt der Porenanteil in der vorliegenden Ausführungsform ca. 25 Volumen-% des gebrannten Ziegelmaterials. Auf diese Weise lässt sich mit dem gebrannten Ziegelmaterial eine Wärmeleitfähigkeit von ca. 0,22 W/(m*K) erzielen, wobei je nach Ausgangsmaterial auch noch niedrigere Werte möglich sind.

Ferner sind in der vorliegenden Ausführungsform die Hochlöcher 2 mit einem Wärmedämmmaterial 8 gefüllt, obgleich dies in Fig. 1 nur für ein Hochloch gezeigt ist. Bei dem Wärmedämmmaterial handelt es sich in der vorliegenden Ausführungsform um Polymer-gebundenes Polystyrol.

Um die oben genannte Porenstruktur des gebrannten Wärmedämmziegels zu erzielen, wird zunächst ein ungebrannter Ziegelrohling hergestellt, bei welchem das ungebrannte Ziegelmaterial einen körnigen Porenbildner enthält. Dabei wird der körnige Porenbildner in der vorliegenden Ausführungsform mit einem Volumenanteil von ca. 25 % zugegeben, wobei die Körner des Porenbildners einen maximalen Radius von ca. 0,5 mm aufweisen.

Als Porenbildner können unterschiedlichste Materialien zum Einsatz kommen, insbesondere solche, die sich beim Brennvorgang verflüchtigen. In der vorliegenden Ausführungsform können beispielsweise Styropor, Maismehlgranulat, Kohlegranulat oder Kombinationen hiervon zum Einsatz kommen.

## Patentansprüche

1. Wärmedämmziegel (1) aus einem gebrannten Ziegelmaterial, mit einem oder einer Mehrzahl von Hochlöchern (2) und mindestens zwei Stoßflächen (3, 4), in denen jeweils eine Verzahnung vorgesehen ist,
**dadurch gekennzeichnet, dass**
dass der Wärmedämmziegel (1) eine Dicke von 26 cm bis 28 cm, bevorzugt 27 cm aufweist, gemessen in einer Richtung senkrecht zur Erstreckungsrichtung des mindestens einen Hochlochs (2) sowie senkrecht zu den Stoßflächen (3, 4).

2. Wärmedämmziegel nach Anspruch 1, **dadurch gekennzeichnet, dass** das gebrannte Ziegelmaterial Poren enthält, die einen maximalen Porenradius von 1,0 mm aufweisen, wobei diese Poren mindestens 20 % des Volumens des Ziegelmaterials einnehmen.

3. Wärmedämmziegel nach Anspruch 2, **dadurch gekennzeichnet, dass** die Poren des Ziegelmaterials einen maximalen Porenradius von 0,8 mm, bevorzugt 0,6 mm aufweisen.

4. Wärmedämmziegel nach Anspruch 2 oder 3, **dadurch gekennzeichnet, dass** die Poren höchstens 30 %, bevorzugt 22 bis 28% des Volumens des Ziegelmaterials einnehmen.

5. Wärmedämmziegel nach einem der vorhergehenden Ansprüche, **dadurch gekennzeichnet, dass** das gebrannte Ziegelmaterial eine Wärmeleitfähigkeit von höchstens 0,25 W/(m*K), bevorzugt höchstens 0,24 W/(m*K) aufweist.

6. Wärmedämmziegel nach einem der vorhergehenden Ansprüche, **dadurch gekennzeichnet, dass** in zumindest einem Hochloch (2) ein Wärmedämmmaterial (8) vorgesehen ist.

7. Wärmedämmziegel nach Anspruch 6, **dadurch gekennzeichnet, dass** das Wärmedämmmaterial (8) einen mineralischen Stoff, wie insbesondere hydrophobiertes Perlit, und/oder ein Kunststoffmaterial wie insbesondere Polystyrol aufweist.

8. Ungebrannter Ziegelrohling für einen Wärmedämmziegel (1) nach einem der vorhergehenden Ansprüche, **dadurch gekennzeichnet, dass** das ungebrannte Ziegelmaterial einen körnigen Porenbildner aufweist, der mindestens 20 % des Volumens des ungebrannten Ziegelmaterials einnimmt, wobei die Körner des Porenbildners einen maximalen Radius von 1,0 mm aufweisen.

9. Ungebrannter Ziegelrohling nach Anspruch 8, **dadurch gekennzeichnet, dass** der Porenbildner ausgewählt ist aus Styropor, Maismehlgranulat und Kohlegranulat.
